# EUROPÄISCHE PATENTANMELDUNG

(11) **EP 4 044 133 A1**
(43) Veröffentlichungstag der Anmeldung: **17.08.2022**
(21) Anmeldenummer: 22152744.3
(22) Anmeldetag: 21.01.2022
(51) Int. Cl.: G07C 5/08, E05B 83/36, E05B 17/00, G05B 23/02

(54) **VERFAHREN ZUR ÜBERTRAGUNG VON ZUSTANDSDATEN EINER ZUGANGSVORRICHTUNG EINES FAHRZEUGS**

(30) Priorität: 10.02.2021 DE 102021103113
(71) Anmelder: Bode - Die Tür GmbH, 34123 Kassel (DE)
(72) Erfinder: Andler, Daniel, 34266 Niestetal (DE)
(74) Vertreter: Patentanwälte Bauer Vorberg Kayser

(57) **Zusammenfassung**

Die Erfindung betrifft ein Verfahren zur Übertragung von Zustandsdaten einer Zugangsvorrichtung (2a, b) eines Fahrzeugs (1), insbesondere eines Fahrzeugs (1) des öffentlichen Personenverkehrs, wobei die Zugangsvorrichtung (2a, b) ein bewegliches Element (3a, b) und einen elektrischen Antrieb (4a, b) zum Verstellen des beweglichen Elements (3a, b) umfasst, wobei der Antrieb (4a, b) mit Steuersignalen (5a, b) einer Steuervorrichtung (6a, b) der Zugangsvorrichtung (2a, b) für einen Verstellvorgang des beweglichen Elements (3a, b) angesteuert wird, wobei der Verstellvorgang über eine Verstelldauer (15a, b) erfasst wird und basierend auf dem erfassten Verstellvorgang Ist-Zustandsdaten (9a, b) zur Beschreibung des erfassten Verstellvorgangs erzeugt und in der Steuervorrichtung (6a, b) hinterlegt werden, wobei die Ist-Zustandsdaten (9a, b) von der Steuervorrichtung (6a, b) an einen Fahrzeugserver (10) des Fahrzeugs (1) über ein Fahrzeugnetzwerk (11) übertragen werden. Das Verfahren ist dadurch gekennzeichnet, dass die Ist-Zustandsdaten (9a, b) kontinuierliche Ist-Zustandsdaten (14a, b) sowie diskrete Ist-Zustandsdaten (16a, b) umfassen, dass die kontinuierlichen Ist-Zustandsdaten (14a, b) und die diskreten Ist-Zustandsdaten (16a, b) in einem gemeinsamen Datenpuffer (17a, b) der Steuervorrichtung (6a, b) abgelegt werden.

## Beschreibung

Die Erfindung betrifft ein Verfahren zur Übertragung von Zustandsdaten einer Zugangsvorrichtung eines Fahrzeugs mit den Merkmalen des Oberbegriffs von Anspruch 1, ein Zugangsvorrichtungssystem für ein Fahrzeug mit den Merkmalen des Oberbegriffs von Anspruch 15 sowie ein Fahrzeug mit den Merkmalen des Oberbegriffs von Anspruch 16.

Grundsätzlich erfolgt bei praktisch allen technischen Vorrichtungen mit zunehmender Betriebsdauer eine Degradation, welche über kurz oder lang zu einem Ausfall und damit dazu führt, dass die Vorrichtung insgesamt oder wesentliche Teile der Vorrichtung repariert oder ausgetauscht werden müssen, bevor ein Weiterbetrieb der Vorrichtung möglich und erlaubt ist. Besonders ungünstig ist ein solcher Ausfall, wenn er überraschend auftritt und damit sowohl den laufenden Betrieb unterbricht als auch für die Dauer der Reparatur oder des Austausches die Verwendung einer Ersatzvorrichtung zur Aufrechterhaltung des Betriebs erfordert. Sowohl die fehlende Antizipierbarkeit solcher Ausfälle als auch die resultierende Notwendigkeit, ein entsprechend großes Reservoir an Ersatzvorrichtungen vorzuhalten, führt zu hohen Kosten. Diese Problematik gilt auch und insbesondere im Bereich von Fahrzeugen des öffentlichen Personenverkehrs und dort speziell bezogen auf Zugangsvorrichtungen wie Tür- und Schiebetrittsysteme.

Dem obigen Problem wird einerseits versucht zu begegnen, indem betriebszeitmä-ßig bestimmte Serviceintervalle vorgesehen sind, nach denen jeweils einzelne Komponenten gewartet oder ausgetauscht werden sollen. Der bei der Berechnung der Serviceintervalle erforderliche Sicherheitsfaktor führt aber bei einem wirksamen Verhindern von Ausfällen dazu, dass solche Wartungen tendenziell zu oft stattfinden und auch Teile ausgetauscht werden, welche an sich noch geraume Zeit vor einem Ausfall eingesetzt werden könnten.

Um also eine zeitlich besser angepasste Wartung der Komponenten zu erreichen ist aus dem Stand der Technik die zustandsbasierte Wartung bekannt, welche auch als "condition-based maintenance" oder CBM bezeichnet wird. Speziell zeigt die DE 10 2017 130 002 A1 aus dem Stand der Technik, von welcher die vorliegende Erfindung ausgeht, ein Verfahren zur zustandsbasierten Instandhaltung einer Zugangsvorrichtung. Hierbei werden an der betreffenden Vorrichtung gemessene Ist-Zustandsdaten mit Soll-Zustandsdaten verglichen und basierend auf dem Vergleich wird ein Instandhaltungszustand der Vorrichtung ermittelt.

Diese Ist-Zustandsdaten umfassen regelmäßig Messdaten, für die ein möglichst vollständiger zeitlicher Verlauf während des Verstellvorgangs zur Beurteilung des Instandhaltungszustands wichtig ist. Aus diesem Umstand folgt regelmäßig, dass die Menge oder das Volumen an solchen Messdaten abhängig von und regelmäßig proportional zu der Dauer des Verstellvorgangs ist. Daneben gibt es auch Messdaten, welche auch dann aussagekräftig sind, wenn sie nicht mit einer gleichmäßigen zeitlichen Auflösung über die Verstelldauer gespeichert werden.

Problematisch am Stand der Technik ist, dass die Dauer eines Verstellvorgangs stark schwanken kann. Das liegt insbesondere daran, dass durch eine tatsächliche oder vermeintliche Kollision mit einem Hindernis während des Verstellvorgangs Reversierbewegungen ausgelöst werden können und das ggf. sogar mehrfach. Gegenüber einem regulären Verstellvorgang kann ein solcher längerer Verstellvorgang ein Vielfaches an Zeit beanspruchen. Das bedeutet aber auch, dass der benötigte Speicher für die Messdaten während des Verstellvorgangs ebenfalls ein Vielfaches dessen betragen kann, welcher für den regulären Verstellvorgang erforderlich ist. Um also auch verwertbare Messdaten für so ein Szenario verarbeiten zu können, muss verfügbarer Speicher in einem Umfang vorgehalten werden, der bei normalen Verstellvorgängen bei weitem nicht ausgenutzt wird. Die selbe Problematik betrifft die Bandbreite eines Kommunikationsweges, über den die Messdaten zur weiteren Verarbeitung übertragen werden.

Daher besteht die Aufgabe der vorliegenden Erfindung darin, die Erfassung, Speicherung und Übertragung der Messdaten dahingehend zu verbessern, dass sie auch bei zeitlich stark variablen Verstellvorgängen sowohl ökonomisch als auch aussagekräftig erfolgen kann.

Bezogen auf ein Verfahren zur Übertragung von Zustandsdaten einer Zugangsvorrichtung eines Fahrzeugs mit den Merkmalen des Oberbegriffs von Anspruch 1 wird diese Aufgabe durch die Merkmale des kennzeichnenden Teils von Anspruch 1 gelöst. Bezogen auf ein Zugangsvorrichtungssystem für ein Fahrzeug mit den Merkmalen des Oberbegriffs von Anspruch 15 wird diese Aufgabe durch die Merkmale des kennzeichnenden Teils von Anspruch 15 gelöst. Bezogen auf ein Fahrzeug mit den Merkmalen des Oberbegriffs von Anspruch 16 wird diese Aufgabe durch die Merkmale des kennzeichnenden Teils von Anspruch 16 gelöst.

Wesentlich für die Erfindung ist die Erkenntnis, dass die gemessenen Zustandsdaten unterschiedlich behandelt werden können je nachdem ob sie für eine sinnvolle Auswertung im Wesentlichen vollständig vorliegen müssen oder ob sie auch unvollständig, stichprobenartig oder summarisch ausreichen. Im Rahmen dieser unterschiedlichen Behandlung erhält die erste Kategorie von gemessenen Daten mehr Datenspeicherplatz eingeräumt als die zweite Kategorie. Auf diese Weise kann an sich knapper Speicherplatz speziell für die Daten genutzt werden, für die er besonders wichtig ist.

Das vorschlagsgemäße Verfahren dient der Übertragung von Zustandsdaten einer Zugangsvorrichtung eines Fahrzeugs, wobei die Zugangsvorrichtung ein bewegliches Element und einen elektrischen Antrieb zum Verstellen des beweglichen Elements umfasst. Grundsätzlich kann es sich um eine beliebige Art von Fahrzeug handeln. Bevorzugt ist, dass es sich um ein Fahrzeug des öffentlichen Personenverkehrs handelt. Vorzugsweise ist das bewegliche Element an dem Fahrzeug befestigt. Das bedeutet, dass das bewegliche Element auch während seiner Bewegung fest mit dem Fahrzeug verbunden ist.

Bei dem vorschlagsgemäßen Verfahren wird der Antrieb mit Steuersignalen einer Steuervorrichtung der Zugangsvorrichtung für einen Verstellvorgang des beweglichen Elements angesteuert, wobei der Verstellvorgang über eine Verstelldauer erfasst wird und basierend auf dem erfassten Verstellvorgang Ist-Zustandsdaten zur Beschreibung des erfassten Verstellvorgangs erzeugt und in der Steuervorrichtung hinterlegt werden. Bevorzugt ist hier, dass das Erfassen des Verstellvorgangs und das Erzeugen der Ist-Zustandsdaten durch eine Messvorrichtung der Zugangsvorrichtung erfolgt. Bevorzugt handelt es sich bei der Verstelldauer um den Zeitraum, in welchem der Verstellvorgang und also eine Bewegung des beweglichen Elements erfolgt. Bei den Ist-Zustandsdaten kann es sich um im Grunde beliebige Daten handeln, welche den Verstellvorgang qualitativ oder quantitativ beschrieben. Die Ist-Zustandsdaten können auch einen an sich beliebigen Umfang haben.

Grundsätzlich können die Ist-Zustandsdaten auf beliebige Art und Weise zustande kommen. Bevorzugt ist, dass die Messvorrichtung die Ist-Zustandsdaten basierend auf einer Messung an der Zugangsvorrichtung erzeugt. Dabei kann es sich um beliebige Arten von Messungen und damit insbesondere um physikalische, mechanische oder elektrische Messungen handeln. Bevorzugt ist weiter, dass die Ist-Zustandsdaten Messsignale zumindest teilweise umfassen. Mit anderen Worten können solche Messsignale auch als solche als Ist-Zustandsdaten verstanden werden. Alternativ oder zusätzlich kann es sein, dass die Ist-Zustandsdaten zumindest teilweise basierend auf Messsignalen erzeugt werden. In diesem Falle entsprechen zumindest einige Ist-Zustandsdaten einer Weiterverarbeitung oder Auswertung der Messsignale.

Grundsätzlich kann es sich bei dem beweglichen Element um ein beliebiges Element handeln. Bei der Zugangsvorrichtung kann es sich insbesondere um ein Türsystem handeln. Vorzugsweise ist das bewegliche Element ein Türflügel. Ebenso kann es sich bei der Zugangsvorrichtung um ein Schiebetrittsystem handeln. Bevorzugt ist, dass das bewegliche Element ein Schiebetritt ist.

Grundsätzlich kann es sich bei den Steuersignalen um beliebige Signale zur Ansteuerung des Antriebs handeln. So kann es sich etwa um digitale Signale zur Ansteuerung des Antriebs handeln. Gemäß einer weiteren bevorzugten Ausführungsform des Verfahrens ist vorgesehen, dass die Steuersignale eine Motorspannung zum Anlegen an den elektrischen Antrieb umfassen. Vorzugsweise bestehen die Steuersignale aus der Motorspannung.

Bei dem vorschlagsgemäßen Verfahren werden die Ist-Zustandsdaten von der Steuervorrichtung an einen Fahrzeugserver des Fahrzeugs über ein Fahrzeugnetzwerk übertragen. Bei dem Fahrzeugnetzwerk kann es sich um ein drahtloses Netzwerk handeln. Ebenso kann es sich bei dem Fahrzeugnetzwerk um ein drahtgebundenes Netzwerk handeln. Vorzugsweise handelt es sich bei dem Fahrzeugnetzwerk um ein lokales Netzwerk. Vorzugsweise ist der Fahrzeugserver zur Befestigung an dem Fahrzeug eingerichtet bzw. an dem Fahrzeug befestigt. Unter einem lokalen Netzwerk ist hier eine beliebige Verbindung zwischen zwei verschiedenen elektronischen Vorrichtungen zu verstehen. Mit anderen Worten geht das lokale Netzwerk über eine rein vorrichtungsinterne datentechnische Verbindung hinaus.

Dabei kann das Fahrzeugnetzwerk eine beliebige Topologie aufweisen und insbesondere auch unter der lediglichen Verbindung von zwei Netzwerkknoten bestehen. Bevorzugt ist, dass das Fahrzeugnetzwerk datentechnisch eine Bustopologie aufweist. Bei einem drahtlosen Netzwerk im vorliegenden Sinne kann es sich auch um ein Netzwerk handeln, welches lediglich teilweise eine drahtlose Übertragung vorsieht. Es kann sich bei dem drahtlosen Netzwerk auch um ein Mobilfunknetzwerk handeln. Bevorzugt ist, dass das Fahrzeugnetzwerk im Multiplexverfahren und insbesondere im Zeitmultiplexverfahren betrieben wird.

Das vorschlagsgemäße Verfahren ist dadurch gekennzeichnet, dass die Ist-Zustandsdaten kontinuierliche Ist-Zustandsdaten sowie diskrete Ist-Zustandsdaten umfassen, dass die kontinuierlichen Ist-Zustandsdaten und die diskreten Ist-Zustandsdaten in einem gemeinsamen Datenpuffer der Steuervorrichtung abgelegt werden und dass wenn die Verstelldauer eine Grenz-Verstelldauer überschreitet, das Mengenverhältnis der kontinuierlichen Ist-Zustandsdaten gegenüber den diskreten Ist-Zustandsdaten größer ist als wenn die Verstelldauer unterhalb der Grenz-Verstelldauer bleibt.

Grundsätzlich kann es sich bei den kontinuierlichen Ist-Zustandsdaten und den diskreten Ist-Zustandsdaten um beliebige Daten handeln welche in beliebiger Art erfasst werden, in beliebiger Form vorliegen und eine im Grunde beliebige Aussage zum Verstellvorgang betreffen. Das Ablegen dieser Daten in einem gemeinsamen Datenpuffer bedeutet, dass dieser Datenpuffer insgesamt im Grunde beliebig zur Verwendung für das Ablegen der kontinuierlichen Ist-Zustandsdaten einerseits und für das Ablegen der diskreten Ist-Zustandsdaten andererseits verwendet werden kann. Anders ausgedrückt gibt es in dem Datenpuffer keinen Bereich, welcher a priori nur für das Ablegen der kontinuierlichen Ist-Zustandsdaten oder nur für das Ablegen er diskreten Ist-Zustandsdaten verwenden werden kann. Mit dem Mengenverhältnis ist das Verhältnis der jeweiligen Datenmenge gemeint, wobei die Datenmenge durch Bit, Byte, Kilobyte und entsprechend größere Einheiten gekennzeichnet werden kann. Nach einem Überschreiten der Grenz-Verstelldauer, welche einer im Grunde beliebigen Dauer haben kann, steigt das Verhältnis der Datenmenge der kontinuierlichen Ist-Zustandsdaten zu der Datenmenge der diskreten Ist-Zustandsdaten. Es wird also den kontinuierlichen Ist-Zustandsdaten mehr Speicherplatz eingeräumt als den diskreten Ist-Zustandsdaten. Auf diese Weise werden also diejenigen Daten priorisiert, deren Vollständigkeit besonders wichtig ist.

Grundsätzlich können die Ist-Zustandsdaten zu einem beliebigen Zweck verwendet werden. Eine bevorzugte Ausführungsform des vorschlagsgemäßen Verfahrens ist dadurch gekennzeichnet, dass basierend auf den Ist-Zustandsdaten, vorzugsweise auch basierend auf den Steuersignalen, Soll-Zustandsdaten ermittelt werden und dass basierend auf einem Vergleich zwischen den Ist-Zustandsdaten und den Soll-Zustandsdaten ein Instandhaltungszustand der Zugangsvorrichtung bestimmt wird. Es können also die Ist-Zustandsdaten für eine zustandsbasierte Instandhaltung verwendet werden.

Grundsätzlich kann eine beliebige Abhängigkeit der Datenmenge der kontinuierlichen Ist-Zustandsdaten von der Verstelldauer bestehen. Eine weitere bevorzugte Ausführungsform des vorschlagsgemäßen Verfahrens ist dadurch gekennzeichnet, dass eine Datenmenge der kontinuierlichen Ist-Zustandsdaten im Datenpuffer im Wesentlichen proportional zu der Verstelldauer ist. Ein solcher Sachverhalt kann insbesondere dann vorliegen, wenn die kontinuierlichen Ist-Zustandsdaten kontinuierlich mit einer im Wesentlichen konstanten Zeitauflösung erfasst werden. Auch die Abhängigkeit der diskreten Ist-Zustandsdaten von der Verstelldauer kann im Grunde beliebig sein. Vorzugsweise ist eine Datenmenge der diskreten Ist-Zustandsdaten im Datenpuffer im Wesentlichen von der Verstelldauer unabhängig.

Grundsätzlich kann die Übertragung der kontinuierlichen Ist-Zustandsdaten gemeinsam mit den diskreten Ist-Zustandsdaten erfolgen. Bevorzugt ist, dass eine Übertragung der kontinuierlichen Ist-Zustandsdaten separat zu einer Übertragung der diskreten Ist-Zustandsdaten erfolgt. Das kann insbesondere bedeuten, dass ein Satz der kontinuierlichen Ist-Zustandsdaten vollständig übertragen wird bevor eine teilweise oder vollständige Übertragung der diskreten Ist-Zustandsdaten erfolgt.

Gemäß einer bevorzugten Ausführungsform des vorschlagsgemäßen Verfahrens ist vorgesehen, dass eine Datenmenge der diskreten Ist-Zustandsdaten im Datenpuffer im Wesentlichen proportional zu der Verstelldauer ist, wenn die Verstelldauer unterhalb eines Verstelldauer-Grenzwerts ist. Dieser Verstelldauer-Grenzwert kann identisch zu der Grenz-Verstelldauer sein. Der Verstelldauer-Grenzwert kann auch verschieden von der Grenz-Verstelldauer sein. Bevorzugt ist weiter, dass eine Datenmenge der diskreten Ist-Zustandsdaten im Datenpuffer auf einen Maximalwert begrenzt ist, wenn die Verstelldauer den Verstelldauer-Grenzwert überschreitet.

Grundsätzlich kann die Verstelldauer von beliebigen Faktoren abhängig sein. Gemäß einer weiteren bevorzugten Ausführungsform des vorschlagsgemäßen Verfahrens ist vorgesehen, dass die Verstelldauer davon abhängig ist, ob der Verstellvorgang eine zwischenzeitliche Bewegungsumkehr des beweglichen Elements umfasst. Daneben kann die Verstelldauer auch von weiteren Faktoren abhängig sein. Grundsätzlich kann der Verstellvorgang eine Bewegung des beweglichen Elements in eine beliebige Richtung umfassen. Bevorzugt ist, dass der Verstellvorgang eine Verstellung des beweglichen Elements aus einer Schließposition in eine Öffnungsposition umfasst. Alternativ oder zusätzlich kann der Verstellvorgang eine Verstellung des beweglichen Elements aus der Öffnungsposition in die Schließposition umfassen. Die Schließposition bzw. die Öffnungsposition beziehen sich auf eine jeweilige Lage des beweglichen Elements, welche einer Schließung bzw. Öffnung des Zugangs zu dem Fahrzeug entspricht.

Eine bevorzugte Ausführungsform des vorschlagsgemäßen Verfahrens ist dadurch gekennzeichnet, dass der Verstellvorgang eine Schließbewegung des beweglichen Elements umfasst und dass die Bewegungsumkehr eine zwischenzeitliche Bewegung des beweglichen Elements in eine Öffnungsrichtung umfasst. Unter einer Schließbewegung ist die Bewegung des beweglichen Elements aus der Öffnungsposition in Richtung der Schließposition zu verstehen. Unter einer Bewegung in die Öffnungsrichtung ist wiederum eine Bewegung des beweglichen Elements aus der Schließposition in Richtung der Öffnungsposition zu verstehen. Bevorzugt ist weiter, dass der Verstellvorgang eine Öffnungsbewegung des beweglichen Elements umfasst und dass die Bewegungsumkehr eine zwischenzeitliche Bewegung des beweglichen Elements in eine Schließrichtung umfasst. Unter einer Öffnungsbewegung ist die Bewegung des beweglichen Elements aus der Schließposition in Richtung der Öffnungsposition zu verstehen. Unter einer Bewegung in die Öffnungsrichtung ist wiederum eine Bewegung des beweglichen Elements aus der Schließposition in Richtung der Öffnungsposition zu verstehen.

Grundsätzlich können die Ist-Zustandsdaten zu einem beliebigen Zeitpunkt an den Fahrzeugserver übertragen werden. Eine weitere bevorzugte Ausführungsform des vorschlagsgemäßen Verfahrens ist dadurch gekennzeichnet, dass die kontinuierlichen Ist-Zustandsdaten während eines Ruhezustands des beweglichen Elements an den Fahrzeugserver übertragen werden. Dieser Zusammenhang bezieht sich auf dasjenige bewegliche Element, für das die kontinuierlichen Ist-Zustandsdaten erzeugt wurden. Das bewegliche Element ist in einem Ruhezustand, wenn es keine Bewegung ausführt. Es kann sein, dass auch die diskreten Ist-Zustandsdaten während eines Ruhezustands des beweglichen Elements an den Fahrzeugserver übertragen werden.

Grundsätzlich kann es sein, dass die Zugangsvorrichtung nur ein einziges bewegliches Element umfasst. Es kann aber auch sein, dass die Zugangsvorrichtung eine Vielzahl von beweglichen Elementen umfasst. Eine weitere bevorzugte Ausführungsform des vorschlagsgemäßen Verfahrens ist entsprechend dadurch gekennzeichnet, dass das Fahrzeug eine Mehrzahl von Zugangsvorrichtungen mit einer jeweiligen Steuervorrichtung umfasst, dass der jeweilige Antrieb der Zugangsvorrichtungen mit jeweiligen Steuersignalen der jeweiligen Steuervorrichtung der Zugangsvorrichtungen angesteuert wird, dass ein jeweiliger Verstellvorgang des jeweiligen beweglichen Elements über eine jeweilige Verstelldauer erfasst wird, dass basierend auf dem jeweiligen erfassten Verstellvorgang jeweilige Ist-Zustandsdaten zur Beschreibung des jeweiligen erfassten Verstellvorgangs erzeugt und in der jeweiligen Steuervorrichtung hinterlegt werden, dass die jeweiligen Ist-Zustandsdaten von der jeweiligen Steuervorrichtung an den Fahrzeugserver über das Fahrzeugnetzwerk übertragen werden, dass die jeweiligen Ist-Zustandsdaten kontinuierliche Ist-Zustandsdaten sowie diskrete Ist-Zustandsdaten umfassen, dass die kontinuierlichen Ist-Zustandsdaten und die diskreten Ist-Zustandsdaten in einem jeweiligen gemeinsamen Datenpuffer der jeweiligen Steuervorrichtung abgelegt werden und dass wenn die jeweilige Verstelldauer eine jeweilige Grenz-Verstelldauer überschreitet, das jeweilige Mengenverhältnis der jeweiligen kontinuierlichen Ist-Zustandsdaten gegenüber den jeweiligen diskreten Ist-Zustandsdaten größer ist als wenn die jeweilige Verstelldauer unterhalb der jeweiligen Grenz-Verstelldauer bleibt.

Bevorzugt ist, dass jeweils nur eine Steuervorrichtung gleichzeitig über das Fahrzeugnetzwerk an den Fahrzeugserver Daten übertragen kann.

Grundsätzlich kann die Übertragung der Ist-Zustandsdaten der einzelnen Steuervorrichtungen in beliebigem zeitlichen Zusammenhang zueinander erfolgen. Gemäß einer bevorzugten Ausführungsform des vorschlagsgemäßen Verfahrens ist vorgesehen, dass die jeweiligen kontinuierlichen Ist-Zustandsdaten der jeweiligen Steuervorrichtungen zeitversetzt zueinander an den Fahrzeugserver übertragen werden. Vorzugsweise werden sie nichtüberlappend zeitversetzt übertragen. Das bedeutet speziell, dass das Übertragen der kontinuierlichen Ist-Zustandsdaten der einen Steuervorrichtung erst beginnt, wenn kein Übertragen der kontinuierlichen Ist-Zustandsdaten der übrigen Steuervorrichtungen stattfindet. Bevorzugt ist weiter, dass die jeweiligen diskreten Ist-Zustandsdaten der jeweiligen Steuervorrichtungen ebenso vorzugsweise nichtüberlappend zeitversetzt zueinander an den Fahrzeugserver übertragen werden.

Gemäß einer weiteren bevorzugten Ausführungsform des vorschlagsgemäßen Verfahrens ist vorgesehen, dass die diskreten Ist-Zustandsdaten eine Eigenschaft des Verstellvorgangs insgesamt beschreiben. Hier ist es bevorzugt, dass die diskreten Ist-Zustandsdaten einen Energieverbrauch des erfassten Verstellvorgangs umfassen. Es handelt sich also um den Energieverbrauch des abgeschlossenen Verstellvorgangs. Folglich beschreibt er den Energieverbrauch des Verstellvorgangs insgesamt.

Eine bevorzugte Ausführungsform des vorschlagsgemäßen Verfahrens ist dadurch gekennzeichnet, dass die kontinuierlichen Ist-Zustandsdaten eine Reihe von Istwerten einer Eigenschaft umfassen, wobei jeder Istwert der Reihe auf einer Messung zu einem jeweils unterschiedlichen Messzeitpunkt während des Verstellvorgangs basiert. Bei dieser Eigenschaft kann es sich um eine im Grunde beliebige physikalische Eigenschaft handeln, welche im Zusammenhang mit dem Verstellvorgang steht. Insbesondere kann es sich um eine Eigenschaft des beweglichen Elements, des Antriebs oder einer sonstigen Komponente der Zugangsvorrichtung handeln. Bevorzugt ist, dass die jeweils unterschiedlichen Messzeitpunkte eine im Wesentlichen identische Zeitauflösung definieren. Anders ausgedrückt ist der zeitliche Abstand zwischen zwei jeweils aufeinanderfolgenden Messzeitpunkten im Wesentlichen konstant.

Eine weitere bevorzugte Ausführungsform des Verfahrens ist, dadurch gekennzeichnet, dass die Zeitauflösung genauer als eine Sekunde ist. Vorzugsweise ist die Zeitauflösung genauer als 100 Millisekunde. Insbesondere kann die Zeitauflösung genauer als 50 Millisekunden sein.

Grundsätzlich kann die Verstelldauer eine beliebige zeitliche Länge aufweisen. Gemäß einer bevorzugten Ausführungsform des Verfahrens ist vorgesehen, dass die Verstelldauer kürzer als 60 Sekunden ist. Vorzugsweise ist die Verstelldauer kürzer als 30 Sekunden. Insbesondere kann es sein, dass die Verstelldauer kürzer als 20 Sekunden ist.

Gemäß einer weiteren bevorzugten Ausführungsform des vorschlagsgemäßen Verfahrens ist vorgesehen, dass die kontinuierlichen Ist-Zustandsdaten eine Temperatur und/oder einen Motorstrom des elektrischen Antriebs und insbesondere eine Temperatur und/oder einen Motorstrom eines Elektromotors des elektrischen Antriebs während des Verstellvorgangs umfassen.

Grundsätzlich kann die Übertragung der Ist-Zustandsdaten nach einem beliebigen Protokoll erfolgen. Eine bevorzugte Ausführungsform des vorschlagsgemäßen Verfahrens ist dadurch gekennzeichnet, dass das Übertragen der Ist-Zustandsdaten über das Fahrzeugnetzwerk auf dem TCP/IP-Protokoll basiert. Weiter ist bevorzugt, dass die Ist-Zustandsdaten durch ein Http-Post-Request über das Fahrzeugnetzwerk übertragen werden.

Das vorschlagsgemäße Zugangsvorrichtungssystem ist für ein Fahrzeug und insbesondere für ein Fahrzeug des öffentlichen Personenverkehrs. Das vorschlagsgemäße Zugangsvorrichtungssystem weist eine Zugangsvorrichtung, welche ein bewegliches Element und einen elektrischen Antrieb zum Verstellen des beweglichen Elements umfasst, eine Steuervorrichtung zur Ansteuerung des Antriebs mit Steuersignalen für einen Verstellvorgang des beweglichen Elements und eine Messvorrichtung auf zum Erfassen des Verstellvorgangs über eine Verstelldauer, zum Erzeugen von Ist-Zustandsdaten zur Beschreibung des erfassten Verstellvorgangs basierend auf dem erfassten Verstellvorgang und zum Hinterlegen der Ist-Zustandsdaten in der Steuervorrichtung.

Das vorschlagsgemäße Zugangsvorrichtungssystem weist ein Fahrzeugnetzwerk und einen Fahrzeugserver zur Anordnung an dem Fahrzeug auf, wobei die Steuervorrichtung zum Übertragen der Ist-Zustandsdaten an den Fahrzeugserver über das Fahrzeugnetzwerk eingerichtet ist.

Das vorschlagsgemäße Zugangsvorrichtungssystem ist dadurch gekennzeichnet, dass die Ist-Zustandsdaten kontinuierliche Ist-Zustandsdaten sowie diskrete Ist-Zustandsdaten umfassen, dass die kontinuierlichen Ist-Zustandsdaten und die diskreten Ist-Zustandsdaten in einem gemeinsamen Datenpuffer der Steuervorrichtung abgelegt sind und dass wenn die Verstelldauer eine Grenz-Verstelldauer überschreitet, das Mengenverhältnis der kontinuierlichen Ist-Zustandsdaten gegenüber den diskreten Ist-Zustandsdaten größer ist als wenn die Verstelldauer unterhalb der Grenz-Verstelldauer bleibt.

Das vorschlagsgemäße Fahrzeug, bei welchem es sich vorzugsweise um ein Fahrzeug für den öffentlichen Personenverkehr handelt, ist dadurch gekennzeichnet, dass ein vorschlagsgemäßes Zugangsvorrichtungssystem aufweist.

Ausgestaltungen, Eigenschaften und Vorteile des vorschlagsgemäßen Zugangsvorrichtungssystems sowie des vorschlagsgemäßen Fahrzeugs entsprechen denjenigen des vorschlagsgemäßen Verfahrens und umgekehrt.

Weitere Einzelheiten, Merkmale, Ziele und Vorteile der vorliegenden Erfindung werden nachfolgend anhand der lediglich ein Ausführungsbeispiel wiedergebenden Zeichnung erläutert. In der Zeichnung zeigt
- Fig. 1: schematisch ein Fahrzeug mit einem vorschlagsgemäßen Zugangsvorrichtungssystem zur Ausführung des vorschlagsgemäßen Verfahrens,
- Fig. 2a, b: schematisch den jeweiligen zeitlichen Ablauf zweier Verstellvorgänge eines beweglichen Elements des Fahrzeugs der Fig. 1 und
- Fig. 3a, b: schematisch die jeweilige Nutzung eines Datenpuffers des Fahrzeugs der Fig. 1 bei den Verstellvorgängen der Fig. 2a, b.

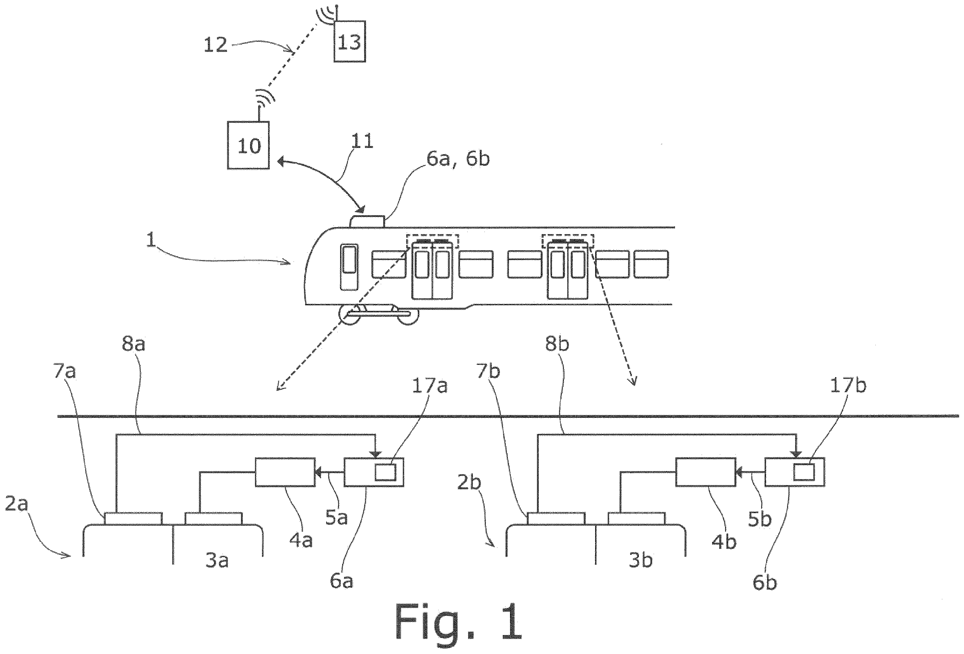

Bei dem in der Fig. 1 dargestellten Fahrzeug 1 handelt es sich um ein Schienenfahrzeug des öffentlichen Personenverkehrs mit einer Vielzahl von an dem Fahrzeug 1 befestigten Fahrgasttüren, von denen hier zwei beispielhaft als Zugangsvorrichtungen 2a, b wiedergegeben sind. Jede Zugangsvorrichtung 2a, b umfasst jeweils ein bewegliches Element 3a, b, bei welchem es sich hier um einen Türflügel handelt, und einen elektrischen Antrieb 4a, b - hier jeweils ein Elektromotor - zum Verstellen des Türflügels.

Die elektrischen Antriebe 4a, b werden jeweils mit Steuersignalen 5a, b angesteuert, welche von einer jeweiligen elektronischen Steuervorrichtung 6a, b des Fahrzeugs 1 ausgehen. Im vorliegenden Fall handelt es sich bei den Steuersignalen 5a, b um eine an den Antrieb 4a, b angelegte Motorspannung. Das Fahrzeug weist ferner Messvorrichtungen 7a, b an jeder Zugangsvorrichtung 2a, b auf, welche Messvorrichtungen 7a, b jeweilige Messsignale 8a, b während eines Verstellvorgangs des jeweiligen beweglichen Elements 3a, b erzeugen. Diese Messignale 8a, b umfassen einerseits den von dem jeweiligen Antrieb 4a, b aufgenommenen Motorstrom und andererseits eine Motortemperatur des jeweiligen Antriebs 4a, b. Der jeweilige Verstellvorgang des beweglichen Elements besteht aus einer Bewegung aus der Schließposition in die Öffnungsposition und einer anschließenden Rückkehr aus der Öffnungsposition in die Schließposition.

Ebenfalls an dem Fahrzeug befestigt aber beabstandet zu den Steuervorrichtungen 6a, b ist ein Fahrzeugserver 10. Die Steuervorrichtungen 6a, b sind über ein Fahrzeugnetzwerk 11 mit dem Fahrzeugserver 10 nachrichtentechnisch verbinden, bei welchem Fahrzeugnetzwerk 11 es sich hier um ein drahtgebundenes Lokalnetzwerk in einer Bustopologie handelt. Der Fahrzeugserver 10 wiederum ist über ein Mobilfunknetzwerk 12 mit einem Zentralserver 13 nachrichtentechnisch verbunden, wobei der Zentralserver 13 stationär und beabstandet zu dem Fahrzeug 1 angeordnet ist.

Aus den Messsignalen 8a, b werden Ist-Zustandsdaten 9a, b wie folgt erzeugt: Die Motortemperatur wird mit einer festen zeitlichen Auflösung gemessen. Dieser Teil der Messignale 8a, b - also die Motortemperatur - bildet kontinuierliche Ist-Zustandsdaten 14a, b. Durch die feste zeitliche Auflösung ist die Datenmenge der kontinuierlichen Ist-Zustandsdaten 14a, b proportional zu der Erfassungsdauer und damit zu einer Verstelldauer 15a, b des beweglichen Elements 3a, b. Ferner werden als diskrete Ist-Zustandsdaten 16a, b jeweilige Energieverbrauchsdaten des beweglichen Elements 3a, b aus dem Motorstrom der Messsignale 8a, b und der Motorspannung der Steuersignale 5a, b. Diese Energieverbrauchsdaten umfassen zwei Werte für jeden Verstellvorgang, nämlich erstens einen Energieverbrauch für die Bewegung von der Schließposition in die Öffnungsposition und zweitens einen Energieverbrauch für die Rückkehr von der Öffnungsposition in die Schließposition. Daraus ergibt sich, dass die Datenmenge dieser diskreten Ist-Zustandsdaten 16a, b unabhängig von der Dauer des Verstellvorgangs ist wenn der Verstellvorgang abgeschlossen wird.

Die Ist-Zustandsdaten 9a, b werden nach dem Verstellvorgang des jeweiligen beweglichen Elements in einem gemeinsamen Datenpuffer 17a, b der jeweiligen Steuervorrichtung 6a, b abgelegt und anschließend über das Fahrzeugnetzwerk 11 an den Fahrzeugserver 10 übertragen. Der Datenpuffer 17a, b ist gemeinsam in dem Sinne, dass sowohl die kontinuierlichen Ist-Zustandsdaten 14a, b als auch die diskreten Ist-Zustandsdaten 16a, b in dem Datenpuffer 17a, b abgelegt werden. Da die Verstellvorgänge der Zugangsvorrichtungen 2a, b des Fahrzeugs regelmäßig nicht synchron stattfinden, erfolgt regelmäßig auch das Erzeugen und Ablegen der Ist-Zustandsdaten 9a, b der verschiedenen Zugangsvorrichtungen 2a, b zeitversetzt und damit nicht synchron.

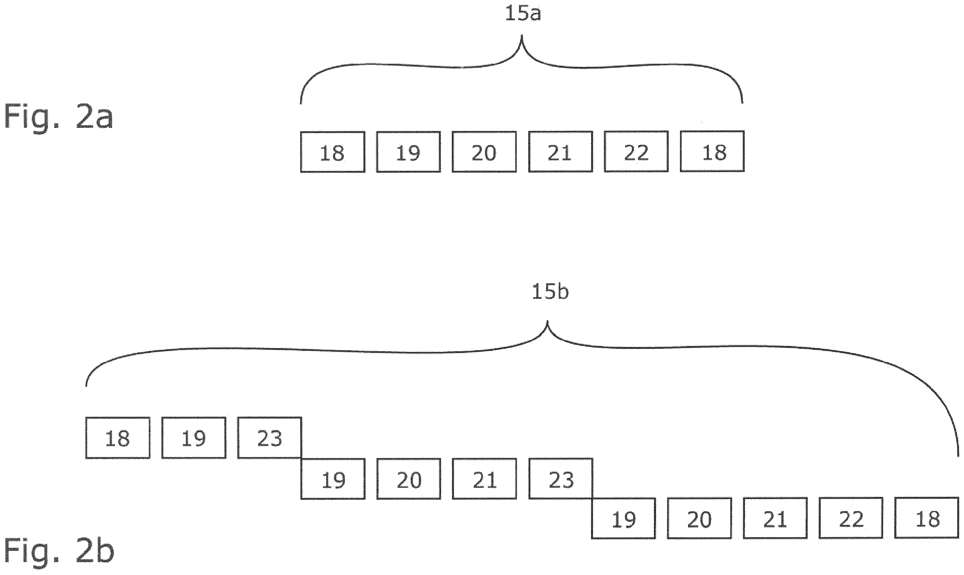

Ein Verstellvorgang kann eine unterschiedliche Verstelldauer aufweisen. In der Fig. 2a ist ein erster solcher Verstellvorgang des ersten beweglichen Elements 3a mit einer ersten Verstelldauer 15a dargestellt. Aus einer Schließposition 18 bewegt sich das bewegliche Element 3a in einer Öffnungsbewegung 19 in die Öffnungsposition 20. Aus dieser bewegt sich das bewegliche Element 3a dann in einer Schließbewegung 21 und einer anschließenden Reservebewegung 22 zurück in die Schließposition 18.

In der Fig. 2b ist ein zweiter Verstellvorgang des ersten beweglichen Elements 3b mit einer zweiten Verstelldauer 15b dargestellt. Auch hier geht das bewegliche Element 3a aus der Schließposition 18 in die Öffnungsbewegung 19 über. Allerdings schließt sich dann ein Hinderniskontakt 23 an, auf den sich dann wieder die Öffnungsbewegung 19 und das Erreichen der Öffnungsposition 20 anschließt. Darauf folgt die Schließbewegung 21 und abermals ein Hinderniskontakt 23. Nun erfolgt eine Bewegungsumkehr durch eine Öffnungsbewegung 19 bis hin zur Öffnungsposition 20. Erst im Anschluss gibt es die Schließbewegung 21 mit anschließender Reservebewegung 22 zurück in die Schließposition 18. Im Ergebnis ist die zweite Verstelldauer 15b wesentlich länger als die erste Verstelldauer 15a. Anders als die erste Verstelldauer 15a überschreitet die zweite Verstelldauer 15b die hier nicht dargestellte Grenz-Verstelldauer.

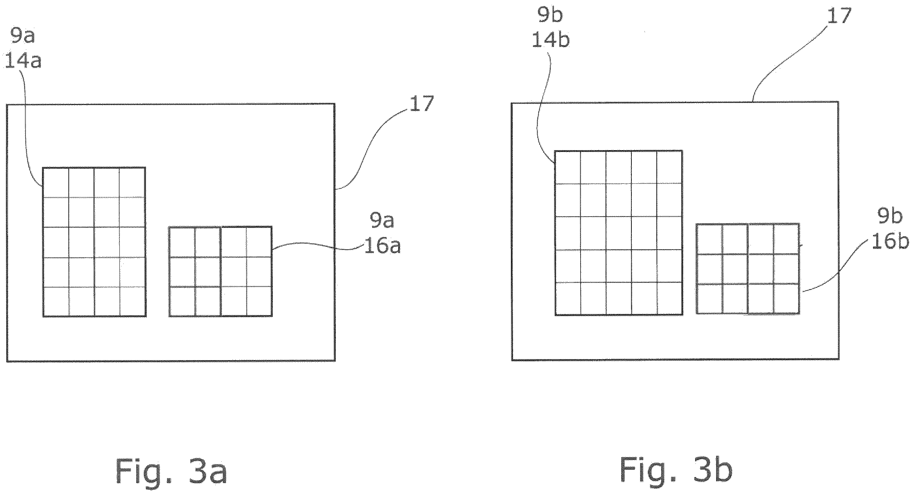

In der Fig. 3a sind die Ist-Zustandsdaten 9a für den ersten Verstellvorgang im Datenpuffer 17a der ersten Steuervorrichtung 6a dargestellt, wobei diese sich in die kontinuierlichen Ist-Zustandsdaten 14a und die diskreten Ist-Zustandsdaten 16a wie oben beschrieben aufteilen. Wegen der kurzen Verstelldauer 15a ist das Mengenverhältnis zwischen diesen beiden jedenfalls kleiner als 2.

Nach dem ersten Verstellvorgang und vordem zweiten Verstellvorgang werden die Ist-Zustandsdaten 9a des ersten Verstellvorgangs von der ersten Steuervorrichtung 6a an den Fahrzeugserver 10 über das Fahrzeugnetzwerk 11 übertragen. Speziell findet dabei die Übertragung der kontinuierlichen Ist-Zustandsdaten 14a in separaten Nachrichten zur Übertragung der diskreten Ist-Zustandsdaten 16a statt.

In der Fig. 3b wiederum sind die Ist-Zustandsdaten 9b für den zweiten Verstellvorgang im selben Datenpuffer 17a dargestellt. Die Datenmenge der kontinuierlichen Ist-Zustandsdaten 14a ist wegen der Proportionalität der kontinuierlichen Ist-Zustandsdaten 14a zu der Verstelldauer erkennbar größer. Ebenso erkennbar ist das Mengenverhältnis zwischen den kontinuierlichen Ist-Zustandsdaten 14b und den diskreten Ist-Zustandsdaten 16b durch die größere Verstelldauer 15b größer als im Falle der Fig. 2a.

Im Anschluss an den zweiten Verstellvorgang werden die Ist-Zustandsdaten 9a des zweiten Verstellvorgangs von der ersten Steuervorrichtung 6a an den Fahrzeugserver 10 über das Fahrzeugnetzwerk 11 übertragen. Auch hier findet die Übertragung der kontinuierlichen Ist-Zustandsdaten 14b in separaten Nachrichten zur Übertragung der diskreten Ist-Zustandsdaten 16b statt.

In dem Fahrzeugserver 10 werden die Ist-Zustandsdaten 9a, b zwischengespeichert und zu einem geeigneten Zeitpunkt an den Zentralserver 13 übertragen, in welchem dann ihre Auswertung für die zustandsbasierte Wartung stattfindet.

## Patentansprüche

1. Verfahren zur Übertragung von Zustandsdaten einer Zugangsvorrichtung (2a, b) eines Fahrzeugs (1), insbesondere eines Fahrzeugs (1) des öffentlichen Personenverkehrs, wobei die Zugangsvorrichtung (2a, b) ein bewegliches Element (3a, b) und einen elektrischen Antrieb (4a, b) zum Verstellen des beweglichen Elements (3a, b) umfasst, wobei der Antrieb (4a, b) mit Steuersignalen (5a, b) einer Steuervorrichtung (6a, b) der Zugangsvorrichtung (2a, b) für einen Verstellvorgang des beweglichen Elements (3a, b) angesteuert wird, wobei der Verstellvorgang über eine Verstelldauer (15a, b) erfasst wird und basierend auf dem erfassten Verstellvorgang Ist-Zustandsdaten (9a, b) zur Beschreibung des erfassten Verstellvorgangs erzeugt und in der Steuervorrichtung (6a, b) hinterlegt werden, wobei die Ist-Zustandsdaten (9a, b) von der Steuervorrichtung (6a, b) an einen Fahrzeugserver (10) des Fahrzeugs (1) über ein Fahrzeugnetzwerk (11) übertragen werden, **dadurch gekennzeichnet, dass** die Ist-Zustandsdaten (9a, b) kontinuierliche Ist-Zustandsdaten (14a, b) sowie diskrete Ist-Zustandsdaten (16a, b) umfassen, dass die kontinuierlichen Ist-Zustandsdaten (14a, b) und die diskreten Ist-Zustandsdaten (16a, b) in einem gemeinsamen Datenpuffer (17a, b) der Steuervorrichtung (6a, b) abgelegt werden und dass wenn die Verstelldauer (15a, b) eine Grenz-Verstelldauer überschreitet das Mengenverhältnis der kontinuierlichen Ist-Zustandsdaten (14a, b) gegenüber den diskreten Ist-Zustandsdaten (16a, b) größer ist als wenn die Verstelldauer unterhalb der Grenz-Verstelldauer bleibt.

2. Verfahren nach Anspruch 1, **dadurch gekennzeichnet, dass** basierend auf den Ist-Zustandsdaten (9a, b) Soll-Zustandsdaten ermittelt werden und dass basierend auf einem Vergleich zwischen den Ist-Zustandsdaten (9a, b) und den Soll-Zustandsdaten ein Instandhaltungszustand der Zugangsvorrichtung (2a, b) bestimmt wird

3. Verfahren nach Anspruch 1 oder 2, **dadurch gekennzeichnet, dass** eine Datenmenge der kontinuierlichen Ist-Zustandsdaten (14a, b) im Datenpuffer (17a, b) im Wesentlichen proportional zu der Verstelldauer (15a, b) ist, vorzugsweise, dass eine Datenmenge der diskreten Ist-Zustandsdaten (16a, b) im Datenpuffer (17a, b) im Wesentlichen von der Verstelldauer (15a, b) unabhängig ist, insbesondere, dass eine Übertragung der kontinuierlichen Ist-Zustandsdaten (14a, b) separat zu einer Übertragung der diskreten Ist-Zustandsdaten (16a, b) erfolgt.

4. Verfahren nach einem der Ansprüche 1 bis 3, **dadurch gekennzeichnet, dass** eine Datenmenge der diskreten Ist-Zustandsdaten (16a, b) im Datenpuffer (17a, b) im Wesentlichen proportional zu der Verstelldauer (15a, b) ist, wenn die Verstelldauer unterhalb eines Verstelldauer-Grenzwerts ist, vorzugsweise, dass eine Datenmenge der diskreten Ist-Zustandsdaten (16a, b) im Datenpuffer (17a, b) auf einen Maximalwert begrenzt ist, wenn die Verstelldauer (15a, b) den Verstelldauer-Grenzwert überschreitet.

5. Verfahren nach einem der Ansprüche 1 bis 4, **dadurch gekennzeichnet, dass** die Verstelldauer (15a, b) davon abhängig ist, ob der Verstellvorgang eine zwischenzeitliche Bewegungsumkehr des beweglichen Elements (3a, b) umfasst, vorzugsweise, dass der Verstellvorgang eine Verstellung des beweglichen Elements (3a, b) aus einer Schließposition (18) in eine Öffnungsposition (20) und/oder eine Verstellung des beweglichen Elements (3a, b) aus der Öffnungsposition (20) in die Schließposition (18) umfasst.

6. Verfahren nach Anspruch 5, **dadurch gekennzeichnet, dass** der Verstellvorgang eine Schließbewegung (21) des beweglichen Elements (3a, b) umfasst und dass die Bewegungsumkehr eine zwischenzeitliche Bewegung des beweglichen Elements (3a, b) in eine Öffnungsrichtung umfasst, vorzugsweise, dass der Verstellvorgang eine Öffnungsbewegung (19) des beweglichen Elements (3a, b) umfasst und dass die Bewegungsumkehr eine zwischenzeitliche Bewegung des beweglichen Elements (3a, b) in eine Schließrichtung umfasst.

7. Verfahren nach einem der Ansprüche 1 bis 6, **dadurch gekennzeichnet, dass** die kontinuierlichen Ist-Zustandsdaten (14a, b) während eines Ruhezustands des beweglichen Elements (3a, b) an den Fahrzeugserver (10) übertragen werden.

8. Verfahren nach einem der Ansprüche 1 bis 7, **dadurch gekennzeichnet, dass** das Fahrzeug (1) eine Mehrzahl von Zugangsvorrichtungen (2a, b) mit einer jeweiligen Steuervorrichtung (6a, b) umfasst, dass der jeweilige Antrieb der Zugangsvorrichtungen (2a, b) mit jeweiligen Steuersignalen (5a, b) der jeweiligen Steuervorrichtung (6a, b) der Zugangsvorrichtungen (2a, b) angesteuert wird, dass ein jeweiliger Verstellvorgang des jeweiligen beweglichen Elements (3a, b) über eine jeweilige Verstelldauer (15a, b) erfasst wird, dass basierend auf dem jeweiligen erfassten Verstellvorgang jeweilige Ist-Zustandsdaten (9a, b) zur Beschreibung des jeweiligen erfassten Verstellvorgangs erzeugt und in der jeweiligen Steuervorrichtung (6a, b) hinterlegt werden, dass die jeweiligen Ist-Zustandsdaten (9a, b) von der jeweiligen Steuervorrichtung (6a, b) an den Fahrzeugserver (10) über das Fahrzeugnetzwerk (11) übertragen werden, dass die jeweiligen Ist-Zustandsdaten (9a, b) kontinuierliche Ist-Zustandsdaten (14a, b) sowie diskrete Ist-Zustandsdaten (16a, b) umfassen, dass die kontinuierlichen Ist-Zustandsdaten (14a, b) und die diskreten Ist-Zustandsdaten (16a, b) in einem jeweiligen gemeinsamen Datenpuffer (17a, b) der jeweiligen Steuervorrichtung (6a, b) abgelegt werden und dass wenn die jeweilige Verstelldauer (15a, b) eine jeweilige Grenz-Verstelldauer überschreitet, das jeweilige Mengenverhältnis der jeweiligen kontinuierlichen Ist-Zustandsdaten (14a, b) gegenüber den jeweiligen diskreten Ist-Zustandsdaten (16a, b) größer ist als wenn die jeweilige Verstelldauer unterhalb der jeweiligen Grenz-Verstelldauer bleibt.

9. Verfahren nach Anspruch 8, **dadurch gekennzeichnet, dass** die jeweiligen kontinuierlichen Ist-Zustandsdaten (14a, b) der jeweiligen Steuervorrichtungen (6a, b) zeitversetzt zueinander, vorzugsweise nichtüberlappend zeitversetzt, an den Fahrzeugserver (10) übertragen werden.

10. Verfahren nach einem der Ansprüche 1 bis 9, **dadurch gekennzeichnet, dass** die diskreten Ist-Zustandsdaten (16a, b) eine Eigenschaft des Verstellvorgangs insgesamt beschreiben, vorzugsweise, dass die diskreten Ist-Zustandsdaten (16a, b) einen Energieverbrauch des erfassten Verstellvorgangs umfassen.

11. Verfahren nach einem der Ansprüche 1 bis 10, dass die kontinuierlichen Ist-Zustandsdaten (14a, b) eine Reihe von Istwerten einer Eigenschaft umfassen, wobei jeder Istwert der Reihe auf einer Messung zu einem jeweils unterschiedlichen Messzeitpunkt während des Verstellvorgangs basiert, vorzugsweise, dass die jeweils unterschiedlichen Messzeitpunkte eine im Wesentlichen gleichmäßige Zeitauflösung definieren.

12. Verfahren nach Anspruch 10, **dadurch gekennzeichnet, dass** die Zeitauflösung genauer als eine Sekunde, vorzugsweise genauer als 100 Millisekunden, insbesondere genauer als 50 Millisekunden ist.

13. Verfahren nach einem der Ansprüche 1 bis 11, **dadurch gekennzeichnet, dass** die Verstelldauer kürzer als 60 Sekunden, vorzugsweise kürzer als 30 Sekunden und insbesondere kürzer als 20 Sekunden ist.

14. Verfahren nach Anspruch 12, **dadurch gekennzeichnet, dass** die kontinuierlichen Ist-Zustandsdaten (14a, b) eine Temperatur des elektrischen Antriebs (4a, b), insbesondere eines Elektromotors des elektrischen Antriebs (4a, b), während des Verstellvorgangs umfassen.

15. Zugangsvorrichtungssystem für ein Fahrzeug (1), insbesondere ein Fahrzeug (1) des öffentlichen Personenverkehrs, mit einer Zugangsvorrichtung (2a, b), welche ein bewegliches Element (3a, b) und einen elektrischen Antrieb (4a, b) zum Verstellen des beweglichen Elements (3a, b) umfasst, mit einer Steuervorrichtung (6a, b) zur Ansteuerung des Antriebs (4a, b) mit Steuersignalen (5a, b) für einen Verstellvorgang des beweglichen Elements (3a, b), mit einer Messvorrichtung (7a, b) zum Erfassen des Verstellvorgangs über eine Verstelldauer (15a, b), zum Erzeugen von Ist-Zustandsdaten (9a, b) zur Beschreibung des erfassten Verstellvorgangs basierend auf dem erfassten Verstellvorgang und zum Hinterlegen der Ist-Zustandsdaten (9a, b) in der Steuervorrichtung (6a, b), mit einem Fahrzeugnetzwerk (11) und mit einem Fahrzeugserver (10) zur Anordnung an dem Fahrzeug (1), wobei die Steuervorrichtung (6a, b) zum Übertragen der Ist-Zustandsdaten (9a, b) an den Fahrzeugserver (10) über das Fahrzeugnetzwerk (11) eingerichtet ist, **dadurch gekennzeichnet, dass** die Ist-Zustandsdaten (9a, b) kontinuierliche Ist-Zustandsdaten (14a, b) sowie diskrete Ist-Zustandsdaten (16a, b) umfassen, dass die kontinuierlichen Ist-Zustandsdaten (14a, b) und die diskreten Ist-Zustandsdaten (16a, b) in einem gemeinsamen Datenpuffer (17a, b) der Steuervorrichtung (6a, b) abgelegt sind und dass wenn die Verstelldauer (15a, b) eine Grenz-Verstelldauer überschreitet, das Mengenverhältnis der kontinuierlichen Ist-Zustandsdaten (14a, b) gegenüber den diskreten Ist-Zustandsdaten (16a, b) größer ist als wenn die Verstelldauer (15a, b) unterhalb der Grenz-Verstelldauer bleibt.

16. Fahrzeug (1), insbesondere für den öffentlichen Personenverkehr, **dadurch gekennzeichnet, dass** das Fahrzeug (1) ein Zugangsvorrichtungssystem nach Anspruch 15 aufweist.
